# EUROPÄISCHE PATENTANMELDUNG

(11) **EP 2 907 990 A1**
(43) Veröffentlichungstag der Anmeldung: **19.08.2015**
(21) Anmeldenummer: 14155549.0
(22) Anmeldetag: 18.02.2014
(51) Int. Cl.: F02C 9/20, F02C 9/28, F02C 9/54

(54) **Verfahren zum Betreiben einer Gasturbinenanlage und dieselbe**

(71) Anmelder: Siemens Aktiengesellschaft, 80333 München (DE)
(72) Erfinder: Burkhardt, Daniel, 47918 Tönisvorst / Vorst (DE); Stieger, Matthias, 93053 Regensburg (DE)

(57) **Zusammenfassung**

Die Erfindung betrifft ein Verfahren zum Betreiben einer Gasturbinenanlage (10) bei einer erhöhten Verdichtereintrittstemperatur (Ti-ist) und einer nahezu konstanten Turbineneintrittstemperatur (TiTiso).

Zu einer Bereitstellung eines sicheren Betriebs der Gasturbinenanlage wird vorgeschlagen, dass eine Erhöhung einer kalkulierten Abgastemperatur (ATK) mit einem verringerten Massenstrom (m) eines einen Verdichter (12) der Gasturbinenanlage (10) durchströmenden Strömungsmediums (14) kompensiert wird.

Ferner betrifft die Erfindung eine Anordnung zum Betreiben der Gasturbinenanlage mit einer Funktionseinheit und eine Gasturbinenanlage mit einem Verdichter, einer Turbine, einer Leittechnik zum Betreiben des erfindungsgemäßen Verfahrens und mit einer Anordnung.

## Beschreibung

Die Erfindung betrifft ein Verfahren zum Betreiben einer Gasturbinenanlage bei einer erhöhten Verdichtereintrittstemperatur und einer nahezu konstanten Turbineneintrittstemperatur sowie eine Anordnung zum Betreiben der Gasturbinenanlage mit einer Funktionseinheit und die oben genannte Gasturbinenanlage mit einem Verdichter, einer Turbine, einer Leittechnik zum Betreiben des erfindungsgemäßen Verfahrens und mit einer oben genannten Anordnung.

Um eine Erhöhung eines Wirkungsgrads einer Gasturbine zu erreichen, werden ein Druckverhältnis und eine Turbineneintrittstemperatur stetig angehoben. Mit einem Ansteigen des Druckverhältnisses steigt auch eine Turbineneintrittstemperatur stetig an. Am kritischsten ist ein Vollastbetrieb an einem heißen Standort, da die Turbineneintrittstemperatur mit der Verdichtereintrittstemperatur und damit der Umgebungstemperatur ansteigt. Ein Betrieb der Gasturbine mit zu hohen Temperaturen kann nachteilige Effekte auf Bauteile der Gasturbine haben. Um dies auszugleichen ist es bekannt auf temperaturresistentere Werkstoffe umzusteigen. Das erhöht jedoch auch die Kosten für Bauteile aus diesen Stoffen. Dem kann entgegengewirkt werden, indem ohne Einsatz teurerer Werkstoffe eine Leistungsabgabe der Gasturbine an heißen Standorten reduziert wird, um die Turbineneintrittstemperatur unterhalb eines jeweiligen Werkstofflimits zu halten. Dadurch wird aber der Wirkungsgrad und somit ein Kundennutzen reduziert.

Aus dem Stand der Technik ist bekannt, zu einer Verminderung der Verdichtereintrittstemperatur im Volllastbetrieb der Gasturbine spezielle Kühlvorrichtungen, wie einen sogenannten Evap-Cooler, einen sogenannten Compressor Inlet Air Chiller (CIAC) oder die sogenannte Wet-Compression, vorzusehen. Durch das Hinzuschalten der Kühlvorrichtung im Vollastbetrieb kann nun eine hohe Leistung erzielt werden. Dadurch kann es jedoch zu einem Leistungsüberschuss kommen, wodurch gewonnene Energie ungenutzt verschenkt wird.

Es ist eine Aufgabe der vorliegenden Erfindung ein Verfahren zum Betreiben einer Gasturbinenanlage bereitzustellen, bei der auch bei einem Betrieb an heißen Tagen ein hoher Wirkungsgrad erreicht werden kann. Ferner ist es eine Aufgabe der Erfindung eine Anordnung zum Betreiben der Gasturbinenanlage mit einer Funktionseinheit bereitzustellen, bei der eine Steuerung/Regelung der Gasturbinenanlage zufriedenstellend möglich ist. Eine weitere Aufgabe der Erfindung ist es eine entsprechende Gasturbinenanlage bereitzustellen, die an heißen Tagen effizient betreibbar ist.

Diese Aufgaben werden erfindungsgemäß gelöst mit einem Verfahren, einer Anordnung und einer Gasturbinenanlage mit den Merkmalen der unabhängigen Ansprüche. Günstige Ausgestaltungen und Vorteile der Erfindung ergeben sich aus den weiteren Ansprüchen und der Beschreibung.

Die Erfindung geht aus von einem Verfahren zum Betreiben einer Gasturbinenanlage bei einer erhöhten Verdichtereintrittstemperatur und einer nahezu konstanten Turbineneintrittstemperatur.

Es wird vorgeschlagen, dass eine Erhöhung einer kalkulierten Abgastemperatur mit einem verringerten Massenstrom eines einen Verdichter der Gasturbinenanlage durchströmenden Strömungsmediums kompensiert wird.

Durch das erfindungsgemäße Verfahren kann vorteilhaft und kundenfreundlich eine Betriebssicherheit, speziell an warmen Standorten, erhöht werden. Mittels der durch das erfindungsgemäße Verfahren realisierten Fahrweise kann auf technische Hilfsmittel zu einer Kühlung der Verdichtereintrittstemperatur verzichtet werden, was Montageaufwand, Platz und Kosten spart. Ferner kann gewährleistet werden, dass die Gasturbinenanlage bei höchst möglicher Leistung betrieben wird, wodurch ein "Verschenken" von Leistung unterbleibt. Zudem kann eine herkömmliche Gasturbinenanlage mit dem Verfahren betrieben werden, wodurch zusätzliche und teure Komponenten vorteilhaft eingespart werden können. Ferner kann somit eine Aufrüstung der herkömmlichen Gasturbinenanlage einfach und schnell erfolgen. Zudem wird durch die im Wesentlichen konstante Turbineneintrittstemperatur eine Erhöhung von Emissionen, wie insbesondere NOₓ oder CO, verhindert. Ferner ist durch die Erhöhung der kalkulierten Abgastemperatur eine Dämpfung von Brennkammerbeschleunigungen möglich, ohne Emissionsgrenzen zu verletzen und unnötige Mehrleistung zu verschenken. Des Weiteren können Bauteile der Gasturbinenanlage, wie beispielsweise ein Gehäuse oder ein Rotor eines Verdichters der Gasturbinenanlage, aus Werkstoffen gefertigt sein, die weniger temperaturresistent sind und damit preisgünstiger sind wie Bauteile aus temperaturresistenten Werkstoffen. Bei dem hier beschriebenen Verfahren sinkt die absolute Leistung der Gasturbinenanlage leicht, jedoch steigt vorteilhaft der Wirkungsgrad.

Eine Gasturbinenanlage stellt hier eine Abfolge von zumindest zwei Bauteileinheiten dar. Hierbei kann die Bauteileinheit beispielsweise ein Verdichter, eine Brennereinheit oder eine Turbine sein. In diesem Zusammenhang soll unter einer Verdichtereintrittstemperatur die Temperatur eines Strömungsmediums, wie beispielsweise Luft, verstanden werden, welches zumindest den Verdichter der Gasturbinenanlage durchströmt. Diese wird auch als Ansaugtemperatur bezeichnet. Unter "erhöht" soll hier eine Temperatur verstanden werden, die Operationsbedingungen der Gasturbinenanlage oder einer ihrer Bauteileinheiten negativ beeinflusst. Dieses Temperaturlimit wird der Fachmann aufgrund seiner Fachkenntnis selbsttätig bestimmen. Es ist beispielsweise bei gängigen Gasturbinenanlagen bekannt, dass ein effektiver, verlustfreier Betrieb mit einem hohen Wirkungsgrad zu ermöglichen ist, wenn die Verdichtereintrittstemperatur zwischen 5°C und 30°C liegt. Unter einer "nahezu konstanten Turbineneintrittstemperatur" soll ein Turbineneintrittstemperaturbereich verstanden werden, der maximal um 15% um einen Mittelwert des Bereichs schwankt, bevorzugt maximal um 10% und besonders bevorzugt maximal um 5%. In diesem Zusammenhang soll unter "kompensiert" "ausgeglichen" oder "aufgehoben" verstanden werden bzw. dass ein Effekt verursacht durch die Verringerung des Massenstroms des Strömungsmediums einen Effekt verursacht durch die Erhöhung der kalkulierten Abgastemperatur kompensiert, aufgehoben, negiert wird. Idealerweise resultiert diese Verfahren auch in einem Betrieb bei einer nahezu konstanten Leistung, wobei die obere Definition von "nahezu konstant" hier analog angewendet werden soll.

Des Weiteren wird vorgeschlagen, dass die Gasturbinenanlage bei einer erhöhten Verdichtereintrittstemperatur von größer 30°C und insbesondere größer 40°C betrieben wird. In anderen Worten, die Verdichtereintrittstemperatur ist größer als 30°C. Dadurch kann ein Verfahren bereitgestellt werden, das bei normalerweise die Gasturbinenanlage negativ beeinflussenden Temperaturen die Gasturbine effektiv aber trotzdem schonend betreibt.

Es ist zudem denkbar, dass das Kompensieren der Erhöhung der kalkulierten Abgastemperatur mit dem verringerten Massenstrom bei Volllast oder bei Teillast der Gasturbinenanlage eingeleitet oder betrieben wird. Dadurch kann der Betrieb der Gasturbinenanlage variabel gestaltet und an den jeweiligen Momentanbedarf an Leistung angepasst werden. Somit könnte bei einer Ansaugtemperatur über 30°C und einem beispielsweise geringeren Leistungsbedarf als beim Volllastbetrieb der Massenstrom des Strömungsmediums reduziert werden, wodurch gewollt die Turbineneintrittstemperatur sinkt, was zu einer vorteilhaften Reduzierung der Schadstoffemission, wie bspw. NOₓ oder CO, führt.

Vorteilhafterweise wird die Verringerung des Massenstroms durch ein Verstellen zumindest einer Leitschaufel des Verdichters bewirkt. Damit kann die Verringerung des Massenstroms konstruktiv einfach, flexibel und schnell erfolgen. Bevorzugterweise werden eine Vielzahl von Leitschaufeln verstellt. Durch das Verstellen der Leitschaufel(n) wird eine effektive Eintrittsfläche/Eintrittsöffnung des Strömungsmediums in den Verdichter reduziert. Unter Volllastbetrieb bzw. Grundlastbetrieb und bei einem Betrieb bei Ansaugtemperaturen kleiner 30°C beträgt eine Leitschaufelstellung beispielsweise 100% was einer maximal geöffneten Position der Leitschaufeln bzw. der Eintrittsöffnung entspricht. Dies muss nicht zwingend einer maximal technisch bzw. konstruktiv möglichen geöffneten Position der Leitschaufel(n) entsprechen, sondern kann auch eine für einen bestimmten Betriebstyp oder Operationsmodus der Gasturbinenanlage festgelegte Leitschaufelposition sein. Erhöht sich nun die Verdichtereintrittstemperatur über 30°C und damit auch die kalkulierte Abgastemperatur wird die Leitschaufelstellung beispielsweise auf 90% gesenkt wodurch die Turbineneintrittstemperatur konstant bleibt.

Durch eine lineare Beziehung der kalkulierten Abgastemperatur mit einer Turbinentemperatur ist die Erhöhung der kalkulierten Abgastemperatur konstruktiv einfach möglich, wenn diese durch eine Erhöhung der Turbinentemperatur bewirkt wird. Grundsätzlich wäre es auch möglich alternativ und/oder zusätzlich die sogenannte PZT (combustor primary zone temperature) heranzuziehen. Die Erhöhung der Turbinentemperatur ist insbesondere einfach realisierbar, indem die Turbinentemperatur durch eine Erhöhung einer Treibstoffzufuhr eines Treibstoffs bewirkt wird.

In einer weiteren Ausgestaltung der Erfindung wird vorgeschlagen, dass die erhöhter Verdichtereintrittstemperatur ermittelt wird indem eine Verdichtereintrittstemperatur - am Eintritt des Verdichters - gemessen wird; diese Verdichtereintrittstemperatur mit einer Soll-Verdichtereintrittstemperatur verglichen wird und bei einer Abweichung der ermittelten Verdichtereintrittstemperatur von der Soll-Verdichtereintrittstemperatur das Kompensieren der erhöhten kalkulierten Abgastemperatur mit dem verringerten Massenstrom des Strömungsmediums eingeleitet wird. Hierdurch kann eine zeitnahe Anpassung der Betriebsparameter an wirkliche Gegebenheiten erfolgen. Des Weiteren ist die Verdichtereintrittstemperatur ein gut zu messender Parameter.

Die Soll-Verdichtereintrittstemperatur kann in einer Steuereinheit und/oder Recheneinheit der Gasturbinenanlage hinterlegt sein (vorgebbare Verdichtereintrittstemperatur) oder sie kann während eines Betriebs der Gasturbinenanlage ermittelt werden und *in situ* verwendet werden (ermittelbare Verdichtereintrittstemperatur). In diesem Zusammenhang und im weiteren Text soll unter "vorgebbar" auch "vorgegeben" und unter "ermittelten" "gemessenen, bestimmt oder errechnet" verstanden werden. Die Soll-Verdichtereintrittstemperatur ist beispielsweise eine Temperatur ≤30°C. Als Soll-Verdichtereintrittstemperatur wird beispielsweise eine Temperatur gewählt, die für sich stromabwärts befindlichen Bauteile unschädliche Betriebsbedingungen ermöglichen. Dies kann beispielsweise abhängig sein von führenden Belastungs- bzw. Temperaturlimits eines Materials eines Bauteils der Gasturbinenanlage, wie beispielsweise ein Gehäuse oder ein Rotor des Verdichters.

Alternativ und/oder zusätzlich ist es vorteilhaft, wenn das Kompensieren eingeleitet wird, wenn eine vorgebbare maximale Turbinentemperatur und/oder PTZ erreicht wird. Diese maximale Temperatur ist abhängig von den Belastungsgrenzen der Bauteile bzw. deren Materialien in der Brennereinheit. Die vorherrschende Turbinentemperatur und/oder PTZ könnte mit einem Sensor in der Brennereinheit ermittelt werden. Da dies durch die in der Brennereinheit herrschenden hohen Temperaturen nur erschwert möglich ist und ein linearer Zusammenhang zwischen der Turbinentemperatur und der realen Abgastemperatur besteht, kann die vorherrschende Turbinentemperatur und/oder PTZ auch durch die reale Abgastemperatur ermittelt werden. Hierdurch ist eine alternative oder zusätzliche Kontrollmöglichkeit gegeben.

Grundsätzlich unterscheidet sich also die neue Fahrweise vom aktuellen Standard dadurch, dass in Abhängigkeit von der Verdichtereintrittstemperatur und damit der Erhöhten kalkulierten Abgastemperatur ein neuer Grundlastpunkt eingestellt wird, indem eine neue Leitschaufelposition eingestellt wird, wobei diese kleiner 100% ist bzw. kleiner als die Leitschaufelposition bei dem vorherigen Grundlastpunkt. In anderen Worten erreicht die Anhebung der Teillast- und Grundlast-ATK in Abhängigkeit von der Verdichtereintrittstemperatur in Kombination mit der gewählten Leitschaufelstellung die zu erfüllenden Leistungs- und Wirkungsgradgarantien.

Ferner wird vorgeschlagen, dass zu der Veränderung der kalkulierten Abgastemperatur vorgebbare Wertepaare aus einer Leitschaufelstellung und einer Treibstoffmenge in Abhängigkeit der Verdichtereintrittstemperatur abgerufen werden. Dadurch kann die Anpassung des Betriebs an sich ändernde bzw. aktuelle Gegebenheiten zeitnah und präzise erfolgen. Diese Wertepaare sind empirisch ermittelt und in einer Wertetabelle in der Steuereinheit der Gasturbinenanlage hinterlegt. Die Werte der Leitschaufelstellung und der Treibstoffmenge bzw. der kalkulierten Abgastemperatur wurden hierbei als jeweils separates Polygon als Funktion der Ansaugtemperatur realisiert.

Bevorzugt wird durch das Kompensieren der erhöhten kalkulierten Abgastemperatur mit dem verringerten Massenstrom des Strömungsmediums eine Kühlung des am Verdichtereintritt in die Gasturbinenanlage eintretenden Strömungsmediums durch eine Kühlvorrichtung, wie bspw. einen Evap-Cooler oder einen Compressor Inlet Air Chiller (CIAC), ersetzt. Dadurch können Montageaufwand, Platz und Kosten eingespart werden. Wäre die Kühlung bei Systemen des Standes der Technik beispielsweise durch einen Evap-Cooler oder durch Wet-Compresion realisiert, wäre ein hoher Wasserbedarf nötig. Der Wegfall der Wasserkühlung ist somit insbesondere an wasserarmen Standorten besonders vorteilhaft.

In einer bevorzugten Ausgestaltung wird das Kompensieren der erhöhten kalkulierten Abgastemperatur mit dem verringerten Massenstrom des Strömungsmediums im Öl-Vormischbetrieb eingeleitet und/oder betrieben. Hierdurch wird das Kompensieren in einem Betriebsmodus der Gasturbinenanlage eingesetzt, in dem die Anlage bei hohen Temperaturen betrieben wird. Dadurch greift die Schutzfunktion des Vermeidens von zu hohen Betriebstemperaturen hier besonders effektiv.

Grundsätzlich kann die Gasturbinenanlage in drei verschiedenen Modi betrieben werden, im Gas-Vormischbetrieb, im Öl-Diffusionsbetrieb und im Öl-Vormischbetrieb. Dies ist abhängig von der Betriebstemperatur und dem verwendeten Treibstoff sowie der automatischen/manuellen Anwahl des Betriebsmodus eines Betreibers. Es ist auch möglich den Öl-Diffusionsbe-trieb und den Öl-Vormischbetrieb parallel zueinander zu verwenden. Es ist sogar so, dass der Öl-Vormischbetrieb aus Stabilitätsgründen nur als Kombination von einer aktiven Öl-Vormisch-Diffusionsstufe möglich ist. Hierbei wird der Öl-Diffusionsmodus verwendet, um eine schnelle, heiße Flamme zu erhalten, die den Verbrennungsprozess stabilisiert. Der Öl-Vormischbetrieb ermöglicht eine dauerhafte und saubere Verbrennung und damit eine geringe Schadstoffemission. Bei einer Kombination der Modi werden die Vorteile beider Betriebsarten kombiniert, was in einem zuverlässigen und unanfälligen Betrieb resultiert. Ein Verhältnis der beiden Modi wird vom Fachmann aufgrund seiner Fachkenntnis selbständig festgelegt und kann beispielsweise 1:20 betragen, d.h. 5% der Leistung der Gasturbinenanlage werden aus dem Öl-Diffusionsbetrieb und 95% aus dem Öl-Vormischbetrieb gewonnen.

In einer weiteren Realisierung der Erfindung ist vorgesehen, dass das Verhältnis des Betriebs der Gasturbinenanlage im Öl-Vormischbetrieb und des Betriebs der Gasturbinenanlage im Öl-Diffusionsbetrieb verändert wird. Hierdurch kann eine weitere Feinabstimmung in der Temperaturregelung der Gasturbinenanlage verwendet werden, die vorteilhaft in einer Erhöhung der Verbrennungsstabilität resultiert. Hierfür kann beispielsweise ein Polygon in der Steuereinheit hinterlegt sein, welches ein Verhältnis der beiden Teilstufen (Öl-Vormischbetrieb und Öl-Diffusionsbetrieb) zur Gesamttreibstoffmenge in Abhängigkeit der relativen Leistung oder des Gesamtfeuerungssollwerts verändert (Verhältnis = UAOV = f(TVI, P) oder Verhältnis = UAOV = f(TVI, Y_min). Dies kann bei Bedarf zu einer entsprechenden Be- oder Entlastung der Gasturbinenanlage führen.

Alternativ und/oder zusätzlich kann es vorteilhaft sein, wenn eine Diffusionsvorlaufmenge eines Brennstoffmassenstroms in Abhängigkeit von einer normierten Leistung der Gasturbinenanlage oder in Abhängigkeit von einem Gesamtfeuerungssollwert der Gasturbinenanlage eingestellt wird. Dadurch ergibt sich eine weitere variable Anpassungsmöglichkeit, um einen optimierten Betrieb der Gasturbinenanlage zu erhalten. Der Brennstoffmassenstrom der Öl-Diffusionsstufe ist der Massenstrom, welcher von der Ölpumpe in Richtung des Brenners strömt. Der Rücklauf ist die Menge Öl, die wieder zurück in den Auffangbehälter fließt ohne an der Verbrennung teilzunehmen. Die Differenz der beiden Mengen wird in die Brennkammer eingespritzt und stellt den Diffusionsölmassenstrom dar. Auch hierfür kann beispielsweise ein Polygon in der Steuereinheit hinterlegt sein, das die Diffusionsvorlaufmenge des Brennstoffmassenstroms einstellt.

Gemäß einer vorteilhaften Ausgestaltung ist vorgesehen, dass bei einer Verdichtereintrittstemperatur von 30°C ein vorgebbares Wertepaar aus einer Leitschaufelstellung und einer Treibstoffmenge abgerufen wird und bei einer Verdichtereintrittstemperatur von 50°C ein vorgebbares Wertepaar aus einer Leitschaufelstellung und einer Treibstoffmenge abgerufen wird und dass bei einer Verdichtereintrittstemperatur zwischen 30°C und 50°C ein Wertepaar aus einer Leitschaufelstellung und einer Treibstoffmenge interpoliert wird. Hierdurch sind die Regelungen für unterschiedliche Temperaturbereiche der Ansaugtemperatur klar festgelegt und voneinander getrennt. Zudem kann ein passendes Wertepaar schnell ermittelt werden. Diese Eckpunkte (Verdichtereintrittstemperatur 30°C und 50°C) sind jeweils über Polygone definiert. Die separaten Wertepaare sind in der Steuereinheit der Gasturbinenanlage hinterlegt.

Es wird ferner vorgeschlagen, dass das Verfahren zu einer abgasbezogenen Steuerung und/oder Regelung unter Berücksichtigung des verringerten Massenstroms des Strömungsmediums und einer Erhöhung einer Turbinentemperatur eingesetzt wird. Dadurch kann die Gasturbinenanlage komfortabel gesteuert werden. Unter der Wendung "abgasbezogene Steuerung" soll verstanden werden, dass die Steuerung in Abhängigkeit von der kalkulierten Abgastemperatur erfolgt. Die Erhöhung der Turbinentemperatur stellt hierbei eine zusätzliche Randbedingung dar.

Eine bevorzugte Weiterbildung besteht darin, dass das Verfahren zu einer Regelung der kalkulierten Abgastemperatur eingesetzt wird, wobei bei dem Verfahren eine Regelgröße die kalkulierten Abgastemperatur ist; Stellgrößen eine Leitschaufelstellung und eine Treibstoffmenge sind und mittels der Verringerung des Massenstrom des Strömungsmediums und einer Erhöhung der Treibstoffmenge eine Änderung der Regelgröße bewirkt wird. Dadurch können Betriebsparameter gezielt und konstruktiv einfach auf die Gegebenheiten der Gasturbinenanlage und ihrer Umgebung angepasst werden.

Die Erfindung geht ferner aus von einer Anordnung, insbesondere einem Regler, zum Betreiben einer Gasturbinenanlage mit einer Funktionseinheit eingerichtet derart, dass das erfindungsgemäße Verfahren ausführbar ist.

Durch die erfindungsgemäße Anordnung kann vorteilhaft ein sicherer und kundenfreundlicher Betrieb, speziell an warmen Standorten, gewährleistet werden. Mittels der so eingerichteten Funktionseinheit kann eine Kühlung der Verdichtereintrittstemperatur entfallen, was Montageaufwand, Platz und Kosten spart. Es kann zudem ermöglicht werden, dass die Gasturbinenanlage bei höchst möglicher Leistung betrieben wird, wodurch ein "Verschenken" von Leistung unterbleibt. Ferner kann eine herkömmliche Funktionseinheit einer Gasturbinenanlage aufgerüstet werden, wodurch zusätzliche und teure Komponenten vorteilhaft eingespart werden können. Auch kann durch die im Wesentlichen konstante Turbineneintrittstemperatur eine Erhöhung von Emissionen, wie insbesondere NOₓ oder CO, verhindert werden.

Bevorzugt weist die Funktionseinheit eine Ermittlungseinrichtung auf, die derart eingerichtet ist, dass die erhöhte Verdichtereintrittstemperatur ermittelbar ist, wodurch eine Umgebungstemperatur bzw. die Ansaugtemperatur konstruktiv einfach ermittelt werden kann.

Ferner weist die Funktionseinheit eine Steuereinheit auf, die derart eingerichtet ist, dass diese Verdichtereintrittstemperatur mit einer Soll-Verdichtereintrittstemperatur vergleichbar ist und bei einer Abweichung der ermittelten Verdichtereintrittstemperatur von der Soll-Verdichtereintrittstemperatur das Kompensieren der erhöhten kalkulierten Abgastemperatur mit dem verringerten Massenstrom des Strömungsmediums einleitbar ist. Dadurch kann effektiv erreicht werden, dass der Betrieb der Gasturbinenanlage an vorherrschende Gegebenheiten angepasst wird.

Die Erfindung geht ferner aus von einer Gasturbinenanlage mit zumindest einem Verdichter, einer Turbine und mit einer Leittechnik in der zumindest das erfindungsgemäße Verfahren implementiert ist sowie mit einer erfindungsgemäßen Anordnung.

Durch die erfindungsgemäße Realisierung kann vorteilhaft eine sicher zu betreibende und kundenfreundliche Gasturbinenanlage bereitgestellt werden. Durch das in der Leittechnik implementierte erfindungsgemäße Verfahren kann eine Kühlung der Verdichtereintrittstemperatur entfallen, was Montageaufwand, Platz und Kosten spart. Ferner kann die Gasturbinenanlage somit bei höchst möglicher Leistung betrieben werden, wodurch ein "Verschenken" von Leistung unterbleibt. Zudem kann das Verfahren in eine herkömmliche Leittechnik der Gasturbinenanlage implementiert werden, wodurch zusätzliche und teure Komponenten vorteilhaft eingespart werden können. Solch eine Aufrüstung kann einfach und schnell erfolgen. Zudem wird durch die im Wesentlichen konstante Turbineneintrittstemperatur eine Erhöhung von Emissionen, wie insbesondere NOₓ oder CO, verhindert. Ferner ist durch die Erhöhung der kalkulierten Abgastemperatur eine Dämpfung von Brennkammerbeschleunigungen möglich, ohne Emissionsgrenzen zu verletzen und unnötige Mehrleistung zu verschenken. Des Weiteren können Bauteile des Verdichterstrangs, wie beispielsweise ein Gehäuse oder ein Rotor, aus weniger temperaturresistenten Werkstoffen gefertigt sein und sind damit preisgünstiger als Bauteile aus temperaturresistenten Werkstoffen.

In diesem Zusammenhang soll unter einer "Leittechnik" die steuernden und/oder regelnden Komponenten, wie die Steuereinheit und/oder Recheneinheit, wie auch die gesteuerten bzw. geregelten Komponenten, wie die Leitschaufel(n), ein Treibstoffventil oder ein Sensor, der Gasturbinenanlage und ein Zusammenspiel dieser Komponenten verstanden werden.

Die Gasturbinenanlage ist ferner betreibbar nach dem erfindungsgemäßen Verfahren.

Die oben beschriebenen Eigenschaften, Merkmale und Vorteile dieser Erfindung, sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Es zeigen:
- FIG 1: einen Schnitt durch eine erfindungsgemäße Gasturbinenanlage mit einer Anordnung zur Regelung einer kalkulierten Abgastemperatur,
- FIG 2: eine schematische Darstellung eines Regelkreislaufs der Anordnung der FIG 1,
- FIG 3: ein Diagramm zeigend Polygone für die Leitschaufelstellung und für die kalkulierte Abgastemperatur in Abhängigkeit von der Verdichtereintrittstemperatur,
- FIG 4: ein Diagramm zeigend eine erste erfindungsgemäße Fahrweise der Gasturbinenanlage der FIG 1 im Vergleich zu einer Fahrweise gemäß eines Verfahrens des Standes der Technik und
- FIG 5: ein Diagramm zeigend eine zweite erfindungsgemäße Fahrweise der Gasturbinenanlage der FIG 1 im Vergleich zu einer Fahrweise gemäß eines Verfahrens des Standes der Technik.

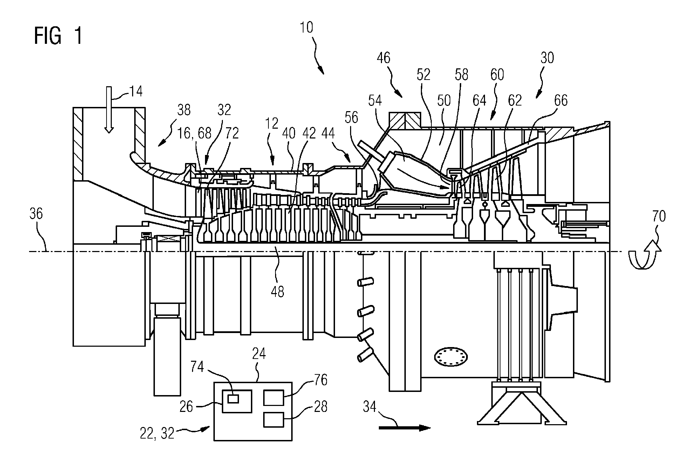

FIG 1 zeigt in einer schematischen Darstellung eine Gasturbinenanlage 10. Die Gasturbinenanlage 10 weist in Strömungsrichtung 34 eines Strömungsmediums 14, wie beispielsweise Luft, bzw. entlang einer longitudinalen bzw. einer Rotationsachse 36 einen Verdichtereintritt 38, eine Kompressoreinheit bzw. einen Verdichter 12 mit einem Gehäuse 40 und einem Rotor 42, einen Verdichteraustritt 44, eine Brennereinheit 46 und eine Turbine 30 auf. Die Gasturbinenanlage 10 weist zudem eine Antriebswelle 48 auf, die um die Rotationsachse 36 rotierbar ist und sich longitudinal entlang der Gasturbinenanlage 10 erstreckt. Die Antriebswelle 48 verbindet die Turbine 30 46 mit dem Verdichter 12.

Während eines Betriebs der Gasturbinenanlage 10 tritt das Strömungsmedium 14 am Verdichtereintritt 38 ein, wird im Verdichter 12 verdichtet und über den Verdichteraustritt 44 der Brennereinheit 46 zugeführt. Die Brennereinheit 46 weist einen Brennerraum 50 mit einer oder mehreren Brennkammern 52 mit jeweils einem Brenner 54 auf. Die Brennkammer(n) 52 und der Brenner/die Brenner 54 sind im Brennerraum 50 angeordnet. Das aus dem Verdichter 12 kommende komprimierte Strömungsmedium 14 tritt in einen Diffusor 56 ein und wird von diesem in die Brennkammer(n) 52 geleitet, von wo ein Anteil dem Brenner 54 zugeleitet wird und dort mit einem gasförmigen oder flüssigen Treibstoff gemischt wird. Das Strömungsmedium/Treibstoff-Gemisch wird dann verbrannt und das Brenngas bzw. das Arbeitsgas der Verbrennung wird über einen Übergangskanal 58 zu der Turbine 30 geleitet.

Die Turbine 30 weist mehrere mit der Antriebswelle 48 verbundene Turbinenräder 60 mit Turbinenschaufeln 62 auf. Zudem sind axial zwischen den Turbinenrädern 60 Leitschaufeln 64 angeordnet, die wiederum mit einem Stator 66 der Gasturbinenanlage 10 verbunden sind. Das Verbrennungsgas aus der Brennkammer/den Brennkammern 52 tritt in die Turbine 30 ein und treibt die Turbinenschaufeln 62 an, die wiederum die Antriebswelle 48 rotierend antreiben. Die Leitschaufeln 64 dienen dazu, den Winkel mit dem das Verbrennungsgas bzw. das Arbeitsgas auf die Turbinenschaufeln 62 trifft zu optimieren. Der Verdichter 12 weist eine axiale Abfolge von Leitschaufelstufen 68 mit mehreren in Umfangsrichtung 70 angeordneten Leitschaufeln 16 und Turbinenschaufelstufen 72 auf. Diese werden durch die Turbinenschaufeln 62 der Turbine 30 und damit der Antriebswelle 48 angetrieben, wodurch das komprimierte Strömungsmedium 14 von der Gasturbinenanlage 10 selbst generiert wird sobald diese in Betrieb ist.

Die Gasturbinenanlage 10 weist ferner eine Funktionseinheit 24 in der Form einer Kontrolleinheit auf, welche zu einer besseren Darstellbarkeit in FIG 1 außerhalb der Gasturbinenanlage 10 gezeigt ist. Die Funktionseinheit 24 weist eine Ermittlungseinrichtung 26 mit zumindest einem Sensor 74, wie beispielsweise eines Temperatursensors, eine Steuereinheit 28 und einen Signalgeber 76 auf. Die Funktionseinheit 24 dient unter anderem zu einer Überwachung der Gasturbinenanlage 10, seiner Bestandteile und des Strömungsmediums 14 und insbesondere von Betriebstemperaturen der Gasturbinenanlage 10.

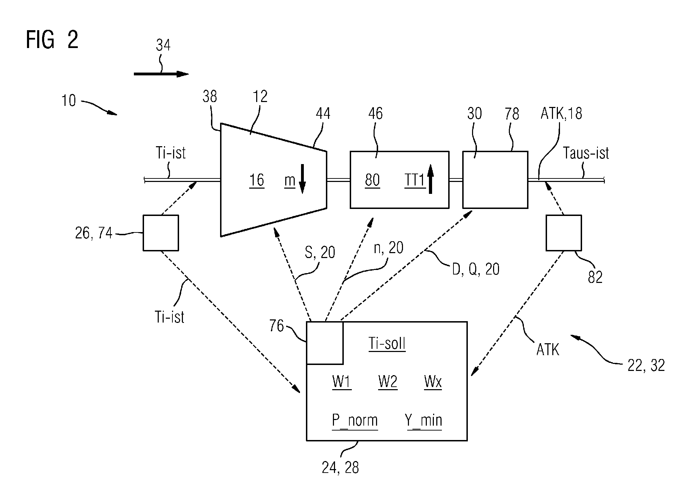

Ein Regelkreis eines Verfahrens zum Betreiben der Gasturbinenanlage 10 ist in FIG 2 gezeigt und wird nachfolgend beschrieben. Während eines Betriebs der Gasturbineneinheit 10 tritt das Strömungsmedium 14 aus einer hier nicht näher bezeichneten Umgebung der Gasturbineneinheit 10 in den Verdichter 12 mit einer Verdichtereintrittstemperatur Ti-ist ein. Diese Verdichtereintrittstemperatur Ti-ist wird von der Ermittlungseinrichtung 26 bzw. ihrem Sensor 74 ermittelt und an die Steuereinheit 28 übermittelt.

Die Steuereinheit 28 vergleicht nun diese ermittelte Verdichtereintrittstemperatur Ti-ist mit einer beispielsweise in der Funktionseinheit 24 hinterlegten Soll-Verdichtereintrittstemperatur Ti-soll. Wird festgestellt, dass die ermittelte Verdichtereintrittstemperatur Ti-ist von der Soll-Verdichtereintrittstemperatur Ti-soll abweicht, wird ein Kompensieren einer erhöhten kalkulierten Abgastemperatur ATK an einem Turbinenaustritt 78 mit einem verringerten Massenstrom m des Strömungsmediums 14 eingeleitet. Hierbei ist die Soll-Verdichtereintrittstemperatur Ti-soll beispielsweise eine Temperatur ≤30°C und die ermittelte Verdichtereintrittstemperatur Ti-ist ist beispielsweise >30°C.

Für die Kompensation der aus der erhöhten Verdichtereintrittstemperatur Ti-ist resultierenden erhöhten kalkulierten Abgastemperatur ATK aktiviert der Signalgeber 76 zum einen einen Aktivator (nicht gezeigten), der die Leitschaufeln 16 des Verdichters 12 verstellt, so dass eine effektive Eintrittsfläche des Strömungsmediums 14 in den Verdichter 12 reduziert wird (nicht gezeigt) und damit der Massenstrom m des Strömungsmediums 14 erniedrigt wird (symbolisiert durch den nach unten gerichteten Pfeil am Bezugszeichen m in FIG 2). Zum anderen aktiviert der Signalgeber 76 eine Erhöhung der Treibstoffmenge n eines Treibstoffs über beispielsweise ein Treibstoffventil 80 in der Brennereinheit 46, wodurch eine Erhöhung einer Turbinentemperatur TT1 in der Brennereinheit 46 erfolgt (symbolisiert durch den nach oben gerichteten Pfeil am Bezugszeichen TT1 in FIG 2).

Hierfür können vorgegebene Wertepaare aus einer Leitschaufelstellung S und einer Treibstoffmenge n in Abhängigkeit der Verdichtereintrittstemperatur Ti-ist, welche >30°C beträgt, in einer ersten Wertetabelle in der Steuereinheit 28 hinterlegt sein. Damit kann in der Steuereinheit 28 zudem eine zweite Wertetabelle mit vorgegebenen Wertepaaren aus einer Leitschaufelstellung S und einer Treibstoffmenge n in Abhängigkeit der Verdichtereintrittstemperatur Ti-ist, welche ≤30°C ist, hinterlegt sein. Diese zweite Wertetabelle wird bei einem Standardbetrieb herangezogen.

Bevorzugt sind jedoch Eckpunkte eines zu erwartenden Temperaturbereichs von erhöhten Turbineneintrittstemperaturen Ti-ist in der Steuereinheit 28 hinterlegt. Das heißt, dass beispielsweise für eine Verdichtereintrittstemperatur Ti-ist von 30°C ein vorgebbares Wertepaar W1 aus einer Leitschaufelstellung S und einer Treibstoffmenge n hinterlegt ist und für eine Verdichtereintrittstemperatur Ti-ist von 50°C ein vorgebbares Wertepaar W2 aus einer Leitschaufelstellung S und einer Treibstoffmenge n hinterlegt ist. Tritt eine Verdichtereintrittstemperatur Ti-ist auf, die zwischen den Eckpunkten bzw. zwischen 30°C und 50°C liegt, wird ein Wertepaar Wx aus einer Leitschaufelstellung S und einer Treibstoffmenge n interpoliert.

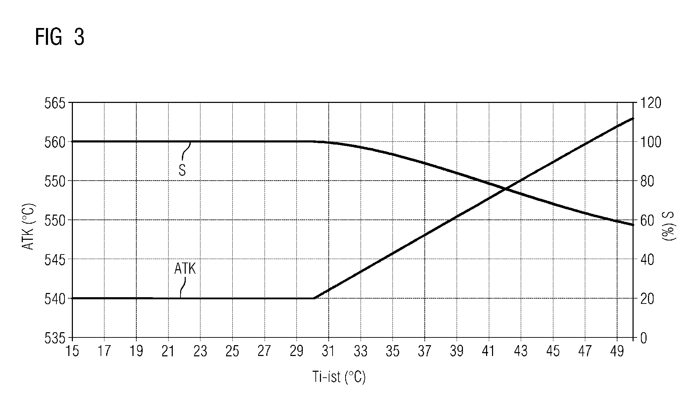

Diese Wertepaare W1, W2, Wx können aus dem Diagramm der FIG 3 entnommen werden, das exemplarische Polygone für die Leitschaufelstellung S und für die kalkulierte Abgastemperatur ATG, die ein Maß der Treibstoffzufuhr n ist, in Abhängigkeit von der Verdichtereintrittstemperatur Ti-ist zeigt. Hierbei ist auf der linken Y-Achse die kalkulierte Abgastemperatur ATK in C°, auf der rechten Y-Achse die Leitschaufelstellung S in % und auf der X-Achse die Verdichtereintrittstemperatur Ti-ist in °C aufgetragen. Die obere Linie repräsentiert die Werte der Leitschaufelstellung S und die untere Linie die Werte der kalkulierten Abgastemperatur ATK.

Wie aus dem Diagramm der FIG 3 hervorgeht, sind die Wertepaare für Verdichtereintrittstemperaturen Ti-ist kleiner 30°C, also der Normalbetrieb der Gasturbinenanlage 10, exemplarisch jeweils eine Leitschaufelstellung S von 100% (obere Linie) und eine kalkulierte Abgastemperatur ATK von 540°C (untere Linie). Steigt die Verdichtereintrittstemperatur Ti-ist an reduziert sich kontinuierlich die Leitschaufelstellung S und die kalkulierte Abgastemperatur ATK steigt kontinuierlich an. Bei einer Verdichtereintrittstemperatur Ti-ist von beispielsweise 45°C beträgt die Leitschaufelstellung S ca. 68% und die kalkulierte Abgastemperatur ATK 555°C.

Für eine zusätzliche Überwachung der Betriebsbedingungen der Gasturbinenanlage 10 weist diese einen weiteren Sensor 82 auf, der die reale Abgastemperatur Taus-ist misst und diese an die Steuereinheit 28 weiterleitet (siehe FIG 2). Übersteigt diese beispielsweise vorab in der Steuereinheit 28 hinterlegte Temperaturlimits, beispielsweise verschiedener Bauteile der Gasturbinenanlage 10, können weitere Maßnahmen zur Änderung der Fahrwiese der Gasturbinenanlage 10 eingeleitet werden (nicht gezeigt).

Die Funktionseinheit 24 stellt eine Anordnung 22 bzw. einen Regler zu einer abgasbezogenen Regelung einer kalkulierten Abgastemperatur ATK dar. Ein daraus resultierendes Verfahren wird somit zur Regelung der kalkulierten Abgastemperatur ATK unter Berücksichtigung des verringerten Massenstroms m des Strömungsmediums 14 und der Erhöhung der Turbinentemperatur TT1 eingesetzt.

Damit stellen die kalkulierten Abgastemperatur ATK eine Regelgröße 18 und die Leitschaufelstellung S und die Treibstoffmenge n jeweils eine Stellgröße 20 dar, wobei mittels der Verringerung des Massenstrom m des Strömungsmediums 14 und der Erhöhung der Treibstoffmenge n eine Änderung der Regelgröße 18 bewirkt wird. Die Anordnung 22 bzw. die Steuereinheit 28 als steuernden und/oder regelnden Komponenten und die Leitschaufeln 16, das Treibstoffventil 80 und die Sensoren 74, 82 als gesteuerte bzw. geregelte Komponenten bilden eine Leittechnik 32.

Das Kompensieren der erhöhten kalkulierten Abgastemperatur ATK mit dem verringerten Massenstrom m des Strömungsmediums 14 wird bevorzugt im Öl-Vormischbetrieb der Gasturbinenanlage 10 eingeleitet bzw. betrieben. Das Verfahren kann besonders flexibel gestaltet werden, wenn ein Verhältnis Q (Q = UAOV = f(Ti-ist, Y_min) des Betriebs der Gasturbinenanlage 10 im Öl-Vormischbetrieb und eines Betriebs der Gasturbinenanlage 10 im Öl-Diffusionsbetrieb verändert wird. Im Öl-Vormischbetrieb sind die Öl-Vormischstufe und die Öl-Diffusionsstufe aktiv, im Öl-Diffusionsbetrieb hingegen lediglich die Öl-Diffusions-stufe. Zudem ist es möglich, dass eine Diffusionsvorlaufmenge D eines Brennstoffmassenstroms in Abhängigkeit von einer normierten Leistung P_norm der Gasturbinenanlage 10 oder in Abhängigkeit von einem Gesamtfeuerungssollwert Y_min der Gasturbinenanlage 10 geregelt wird. Somit stellen das Verhältnis Q der Betriebsmodi und die Diffusionsvorlaufmenge D auch Regelgrößen 20 dar.

Es ist zudem denkbar, dass das Kompensieren der Erhöhung der kalkulierten Abgastemperatur ATK mit dem verringerten Massenstrom m des Strömungsmediums bei Volllast oder bei Teillast des Verdichterstrangs 10 eingeleitet oder betreiben wird.

Durch die hier beschriebene Regelung kann bei einer erhöhten Verdichtereintrittstemperatur Ti-ist (>30°C) ein Betrieb der Gasturbinenanlage 10 bei einer nahezu konstante Turbineneintrittstemperatur TiTiso realisiert werden.

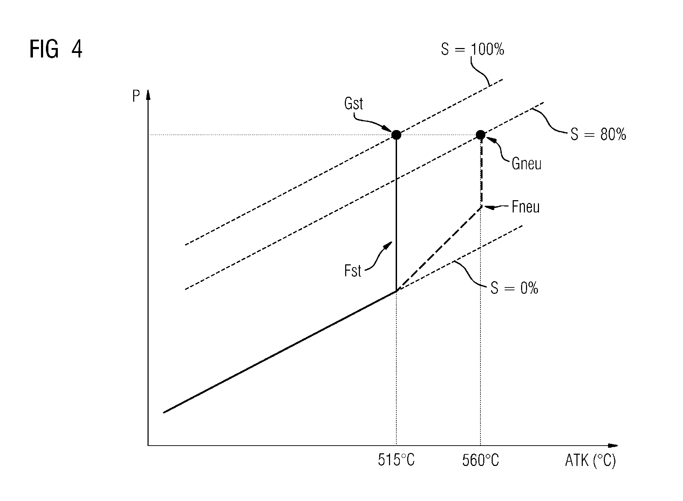

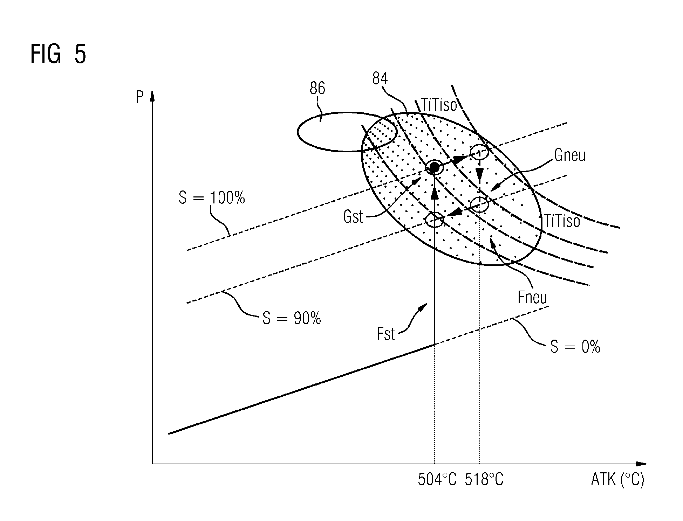

Die FIG 4 und 5 sind zwei exemplarische Fahrweisen der Gasturbinenanlage 10 nach dem erfindungsgemäßen Verfahren im Vergleich zu einem Verfahren nach dem Stand der Technik gezeigt. Hierbei ist jeweils auf der Y-Achse die Leistung P und auf der X-Achse die kalkulierte Abgastemperatur ATK in C° aufgetragen.

Die drei geraden Linien repräsentieren die Leitschaufelstellung S für drei unterschiedliche Stellungen, nämlich 100%, 80% und 0% in FIG 4 und 100%, 90% und 0% in FIG 5. In der FIG 5 sind zusätzlich vier Kurvenverläufe für unterschiedliche Turbineneintrittstemperaturen TiTiso gezeigt, wobei die oberste Kurve die höchste und die untere Kurve die niedrigste TiTiso repräsentiert. Ferner ist als Oval mit unterschiedlich dicht gepunktetem Verlauf ein experimentell ermittelter Bereich 84 von Brennkammerbeschleunigungen und als offenes Oval ein experimentell ermittelter Bereich 86 von 90 Hertz (Hz) Schwingungen gezeigt (Details siehe unten).

Bezogen auf FIG 4 zeigt das linke Polygon die exemplarische Standard Fahrweise Fst nach dem Stand der Technik. Hierbei ist bei einer kalkulierten Abgastemperatur ATK beispielsweise kleiner als 515°C eine Leitschaufelstellung S 0%, wobei die Leistung P mit der kalkulierten Abgastemperatur ATK stetig ansteigt. Ist die Leitschaufelstellung S auf 0% kann eine weitere Lastabsenkung nur durch Absenken der kalkulierten Abgastemperatur ATK erfolgen. Dies wird üblicherweise dann nur noch im Öl-Diffusionsbetrieb realisiert. Erreicht die kalkulierten Abgastemperatur ATK eine Temperatur von hier 515°C wird die Leitschaufelstellung S auf 100% gestellt, wodurch die Leistung P ansteigt. Dies entspricht nun dem Grundlastbetrieb mit einem Standard Grundlastpunkt Gst.

Das rechte Polygon zeigt die neue Fahrweise nach dem erfinderischen Verfahren exemplarisch bei einer erhöhten Turbineneintrittstemperatur Ti-ist von 45°C. Bis zum Erreichen der 515°C und der Einstellung der Leitschaufelstellung S von 0% entspricht diese Fahrweise Fneu der Fahrweise Fst des Standes der Technik (Ti-ist ≤ 30°C). Ausgehend von hier kann die Gasturbinenanlage 10 weiter belastet werden, indem die Leitschaufelstellung S stetig erhöht wird (vgl. Anstieg des Polygons in FIG 4), wodurch die Leistung P ansteigt. In Abhängigkeit der vorherrschenden Turbineneintrittstemperatur Ti-ist wird nun die zugehörige kalkulierte Abgastemperatur ATK ermittelt (bspw. 515°C für Ti-ist ≤ 30°C und 560°C für Ti-ist ≤ 50°C, dazwischen wird interpoliert). Je nach ermittelter kalkulierter Abgastemperatur ATK bzw. bei einer ATK von > 30 °C wird nun die dazugehörige interpolierte Leitschaufelstellung S eingestellt. Somit wird die Erhöhung der kalkulierten Abgastemperatur ATK durch die Reduzierung des Massenstroms m kompensiert.

Dies geschieht beim Belasten solange, bis ein neuer Grundlastpunkt Gneu erreicht wird. Der beispielsweise bei einer Leitschaufelstellung S von 80% liegt. Der Standard Grundlastpunkt Gst steht bei TCI ≤ 30°C bei einer Leitschaufelstellung S von 100% und einer kalkulierten Abgastemperatur ATK von 515°C. Der neue Grundlastpunkt Gneu liegt hingegen bei TCI ≤ 50°C bei einer Leitschaufelstellung S von < 100% (hier exemplarisch 80%) und einer kalkulierten Abgastemperatur ATK von > 515°C (hier exemplarisch 560°C). Dies ergibt sich je nach Parametrierung des zugehörigen Polygons. Wird die Gasturbinenanlage 10 konstant auf Grundlast betrieben und ändert sich die Turbineneintrittstemperatur Ti-ist werden die Leitschaufelstellung S und die kalkulierte Abgastemperatur ATK analog wie in FIG°3 gezeigt gesteuert. Gemäß der in FIG 4 exemplarisch gezeigten Fahrweise, wird am neuen Grundlastpunkt Gneu dieselbe Leistung P erbracht, wie bei dem Betrieb am Standard Grundlastpunkt Gst gemäß der Standard Fahrweise Fst.

Das linke Polygon in FIG 5 zeigt wiederum die Standard Fahrweise Fst nach dem Stand der Technik. Erreicht in diesem Beispiel die kalkulierten Abgastemperatur ATK eine Temperatur von 504°C wird die Leitschaufelstellung S von 0% auf 100% gestellt, wodurch die Leistung P auf den Standard Grundlastpunkt Gst ansteigt (erster Kreis im Parallelogramm). Steigt nun die kalkulierte Abgastemperatur ATK an, steigt auch die Leistung P und die TiTiso an (zweiter Kreis im Parallelogramm).

Übersteigt nun die Verdichtereintrittstemperatur Ti-ist 30°C (ATK > 30°C), was im vorliegenden Beispiel einer kalkulierten Abgastemperatur ATK von 518°C entspricht, wird dieser Anstieg durch das Verstellen der Leitschaufelstellung S auf 90% und damit durch die Reduzierung des Massenstroms m kompensiert. Das entspricht nun einem neuen Grundlastpunkt Gneu (dritter Kreis im Parallelogramm). Dieser neue Grundlastpunkt Gneu liegt auf annähernd derselben Turbineneintrittstemperatur TiTiso Kurve, wie der Standard Grundlastpunkt Gst.

Fällt nun die kalkulierte Abgastemperatur ATK wegen einer reduzierten Verdichtereintrittstemperatur Ti-ist, würden sich bei fehlender Gegensteuerung die Turbineneintrittstemperatur TiTiso und die Leistung P reduzieren (vierter Kreis im Parallelogramm). Gemäß der neuen Fahrweise wird dieser Punkt jedoch nicht erreicht, da die Leitschaufelstellung S parallel zum Absenken der kalkulierten Abgastemperatur ATK bei fallender Turbineneintrittstemperatur Ti-ist angehoben wird (nicht gezeigt); d.h. es wird von Punkt 3 auf Punkt 1 gegangen. Neuer Grundlastpunkt Gneu ist bei diesem Beispiel, wie oben ausgeführt, Punkt 3 für Ti-ist > 30°C mit einem absoluten Leistungsabfall, aber einem Wirkungsgradgewinn (vgl. Leitung P für Gst und Gneu).

Die neue Fahrweise Fneu mit dem Betrieb beim neuen Grundlastpunkt Gneu hat auch den entscheidenden Vorteil, dass hier weniger Brennkammerbeschleunigungen auftreten, wie bei der Standard Fahrweise Fst. Wie anhand der Dichteverteilung der Punkte des Bereichs 84 zu sehen ist, treten schwache und unschädliche Brennkammerbeschleunigungen bei kalkulierten Abgastemperatur ATK von über ca. 520°C auf (dünn gepunkteter Bereich 84). Je weiter die Leistung P der Gasturbinenanlage 10 angehoben wird und je weiter die kalkulierten Abgastemperatur ATK abgesenkt wird und mit einem Maximum bei ca. 500°C, treten kritische Brennkammerbeschleunigungen auf (dicht gepunkteter Bereich 84).Der neue Grundlastpunkt Gneu liegt somit im Bereich der schwachen und unschädlichen Brennkammerbeschleunigungen.

Damit ist durch die Erhöhung der kalkulierten Abgastemperatur ATK eine Dämpfung von Brennkammerbeschleunigungen möglich, ohne Emissionsgrenzen zu verletzen und unnötige Mehrleistung zu verschenken. Dadurch können erforderliche Leistungs- und Emissionsgarantien eingehalten werden, die für einen zuverlässigen und kundenfreundlichen Betrieb der Gasturbinenanlage 10 entscheidend sind.

Auch liegt der neue Grundlastpunkt Gneu bezüglich 90 Hz Schwingungen in einem weniger kritischen Bereich, wie der Standard Grundlastpunkt Gst, da verstärkte und schädigende 90 Hz Schwingungen in einem Bereich der kalkulierten Abgastemperatur ATK von ca. 480°C und 500°C auftreten (vgl. Bereich 86).

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum Betreiben einer Gasturbinenanlage (10) bei einer erhöhten Verdichtereintrittstemperatur (Ti-ist und einer nahezu konstanten Turbineneintrittstemperatur (TiTiso), **dadurch gekennzeichnet, dass** eine Erhöhung einer kalkulierten Abgastemperatur (ATK) mit einem verringerten Massenstrom (m) eines einen Verdichter (12) der Gasturbinenanlage (10) durchströmenden Strömungsmediums (14) kompensiert wird.

2. Verfahren nach Anspruch 1,
**dadurch gekennzeichnet, dass** die Gasturbinenanlage (10) bei einer erhöhten Verdichtereintrittstemperatur (Ti-ist) von größer 30°C betrieben wird.

3. Verfahren nach Anspruch 1 oder 2,
**dadurch gekennzeichnet, dass** die Verringerung des Massenstroms (m) durch ein Verstellen zumindest einer Leitschaufel (16) des Verdichters (12) bewirkt wird.

4. Verfahren nach einem der vorhergehenden Ansprüche,
**dadurch gekennzeichnet, dass** die Erhöhung der kalkulierten Abgastemperatur (ATK) durch eine Erhöhung einer Turbinentemperatur (TT1) bewirkt wird und insbesondere dass die Turbinentemperatur (TT1) durch eine Erhöhung einer Treibstoffmenge (z) eines Treibstoffs bewirkt wird.

5. Verfahren nach einem der vorhergehenden Ansprüche,
**dadurch gekennzeichnet, dass** die erhöhte Verdichtereintrittstemperatur (Ti-ist) ermittelt wird indem
- eine Verdichtereintrittstemperatur (Ti-ist) gemessen wird;
- diese Verdichtereintrittstemperatur (Ti-ist) mit einer Soll-Verdichtereintrittstemperatur (Ti-soll) verglichen wird und
- bei einer Abweichung der ermittelten Verdichtereintrittstemperatur (Ti-ist) von der Soll-Verdichtereintrittstemperatur (Ti-soll) das Kompensieren der erhöhten kalkulierten Abgastemperatur (ATK) mit dem verringerten Massenstrom des Strömungsmediums (14) eingeleitet wird.

6. Verfahren nach einem der vorhergehenden Ansprüche,
**dadurch gekennzeichnet, dass** zu der Veränderung der kalkulierten Abgastemperatur (ATK) vorgebbare Wertepaare (W1, W2, Wx) aus einer Leitschaufelstellung (S) und einer Treibstoffmenge (n) in Abhängigkeit der Verdichtereintrittstemperatur (Ti-ist) abgerufen werden.

7. Verfahren nach einem der vorhergehenden Ansprüche,
**dadurch gekennzeichnet, dass** das Kompensieren der erhöhten kalkulierten Abgastemperatur (ATK) mit dem verringerten Massenstrom (m) des Strömungsmediums (14) im Öl-Vormischbetrieb eingeleitet wird.

8. Verfahren nach einem der vorhergehenden Ansprüche,
**dadurch gekennzeichnet, dass** ein Verhältnis (Q) eines Betriebs der Gasturbinenanlage (10) im Öl-Vormischbetrieb und eines Betriebs der Gasturbinenanlage (10) im Öl-Diffusionsbetrieb verändert wird.

9. Verfahren nach einem der vorhergehenden Ansprüche,
**dadurch gekennzeichnet, dass** eine Diffusionsvorlaufmenge (D) eines Brennstoffmassenstroms in Abhängigkeit von einer normierten Leistung (P_norm) der Gasturbinenanlage (10) oder in Abhängigkeit von einem Gesamtfeuerungssollwert (Y_min) der Gasturbinenanlage (10) eingestellt wird.

10. Verfahren nach einem der vorhergehenden Ansprüche,
**dadurch gekennzeichnet, dass** bei einer Verdichtereintrittstemperatur (Ti-ist) von 30°C ein vorgebbares Wertepaar (W1) aus einer Leitschaufelstellung (S) und einer Treibstoffmenge (n) abgerufen wird und bei einer Verdichtereintrittstemperatur (Ti-ist) von 50°C ein vorgebbares Wertepaar (W2) aus einer Leitschaufelstellung (S) und einer Treibstoffmenge (n) abgerufen wird und dass bei einer Verdichtereintrittstemperatur (Ti-ist) zwischen 30°C und 50°C ein Wertepaar Wx aus einer Leitschaufelstellung (S) und einer Treibstoffmenge (n) interpoliert wird.

11. Verfahren nach einem der vorhergehenden Ansprüche, eingesetzt bei einer abgasbezogenen Steuerung und/oder Regelung unter Berücksichtigung des verringerten Massenstroms (m) des Strömungsmediums (14) und einer Erhöhung einer Turbinentemperatur (TT1).

12. Verfahren nach einem der vorhergehenden Ansprüche, eingesetzt zu einer Regelung einer kalkulierten Abgastemperatur (ATK) bei dem
- eine Regelgröße (18) die kalkulierten Abgastemperatur (ATK) ist;
- Stellgrößen (20) eine Leitschaufelstellung (S)und eine Treibstoffmenge (n) sind und
- mittels der Verringerung des Massenstrom (m) des Strömungsmediums (14) und einer Erhöhung der Treibstoffmenge (n) eine Änderung der Regelgröße (18) bewirkt wird.

13. Anordnung (22) zum Betreiben einer Gasturbinenanlage (10) mit einer Funktionseinheit (24) eingerichtet derart, dass ein Verfahren nach zumindest einem der Ansprüche 1 bis 12 ausführbar ist.

14. Anordnung nach Anspruch 13,
**dadurch gekennzeichnet, dass** die Funktionseinheit (24) eine Ermittlungseinrichtung (26) und eine Steuereinheit (28) aufweist, wobei beide derart eingerichtet sind, dass ein Verfahren zumindest nach Anspruch 5 ausführbar ist.

15. Gasturbinenanlage (10) mit zumindest einem Verdichter (12), einer Turbine (30) und mit einer Leittechnik (32) in der zumindest ein Verfahren nach zumindest einem der Ansprüche 1 bis 12 implementiert ist sowie mit einer Anordnung (22) nach zumindest einem der Ansprüche 13 oder 14.
